# EUROPEAN PATENT APPLICATION

(11) **EP 1 286 246 A2**
(43) Date of publication of application: **26.02.2003**
(21) Application number: 02254485.2
(22) Date of filing: 26.06.2002
(51) Int. Cl.: G06F 1/16

(54) **Cradle for portable terminal**

(30) Priority: 21.08.2001 KR 2001050469
(71) Applicant: SAMSUNG ELECTRONICS CO., LTD., Suwon-City, Kyungki-do (KR)
(72) Inventor: Youn, Jae-sam, Suwon-city, Gyunggi-do (KR)
(74) Representative: Geary, Stuart Lloyd

(57) **Abstract**

A cradle device for a portable terminal such as a PDA (personal digital assistance) has a cradle body (10) in which the portable terminal is placed and a holder (20) to embrace the portable terminal received on the cradle body (10). The holder (20) is rotatable with respect to the cradle body (10) within a predetermined angular range. The holder (20) is held in position by friction between components in the pivots (30), connecting it to the body (10)

## Description

The present invention relates to a cradle for a portable electronic apparatus, the cradle comprising coupling means for engaging a lower portion of a portable electronic apparatus to support the portable electronic apparatus.

Generally, cradles are used to supply electrical power to portable terminals such as PDA (personal digital assistance) and provide convenient storage for such devices. Recently, portable terminals have been becoming more widely used and have acquired better communications facilities. Accordingly, the cradles also need improved functions. However, when a portable terminals are used for computing or communication when in a cradle, there is inconvenience to the user because of the limited orientations of the terminal available.

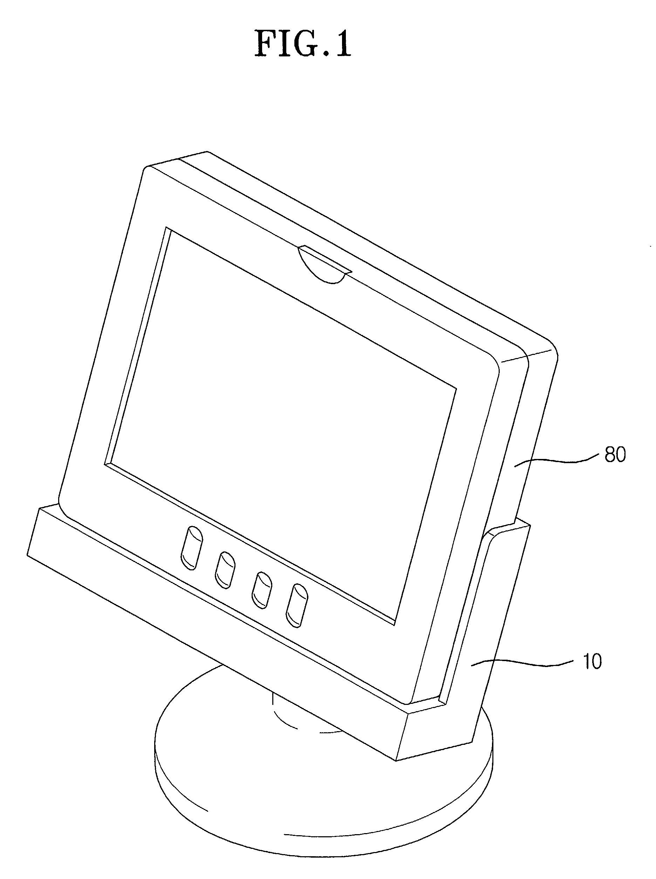

In other words, as illustrated in Figure 1, the user charges a portable terminal 80, or uses the portable terminal 80, by settling the portable terminal 80 on a cradle 10 to supply the portable terminal 80 with electrical power. In the conventional cradle 10, there is only means to receive the portable terminal 80. Also, the conventional cradle 10 has a simple structure for connecting an external electrical power supply to the portable terminal 80.

When the portable terminal 80 is settled in the cradle 10, the user is inconvenienced since the user can use the portable terminal 80 at only a fixed angle due to the cradle 10. In other words, although the angle of a screen of the portable terminal 80 needs to be adjusted for such working conditions as light or the position of the user, the conventional cradle 10 cannot be manipulated to adjust the angle of the screen of the portable terminal 80. Therefore, there is a problem that the user often has to use the portable terminal 80 in a non-optimal orientation.

A cradle according to the present invention is characterised in that the coupling means is pivotable for supporting the portable electronic apparatus at different orientations.

Preferably, the coupling means is pivotably mounted within a body of the cradle.

Preferably, the coupling means is held in position by friction, the friction being insufficient to prevent manual pivoting of the coupling means for reorienting the portable electronic apparatus.

Preferably, an electrical connector is mounted to the coupling means for connection with a complementary connector of a portable electronic apparatus when the portable electronic apparatus is supported by the coupling means.

Preferably, the coupling means comprises a trough for receiving a lower portion of a portable electronic apparatus. More preferably, the trough is coupled to pivots at either end.

The cradle and a portable electronic apparatus may be provided together in a kit.

An embodiment of the present invention will now be described, by way of example, with reference to Figures 2 to 5 of the accompanying drawings, in which:
Figure 1 illustrates a conventional cradle device embracing a portable terminal;
Figure 2 is a plan view illustrating a cradle device according to the present invention;
Figure 3 is a front view of the cradle device of Figure 2;
Figure 4 is an exploded perspective view of the settlement unit shown in Figure 3; and
Figure 5 is a side view illustrating the available range of the angular adjustment of the cradle of Figure 2.

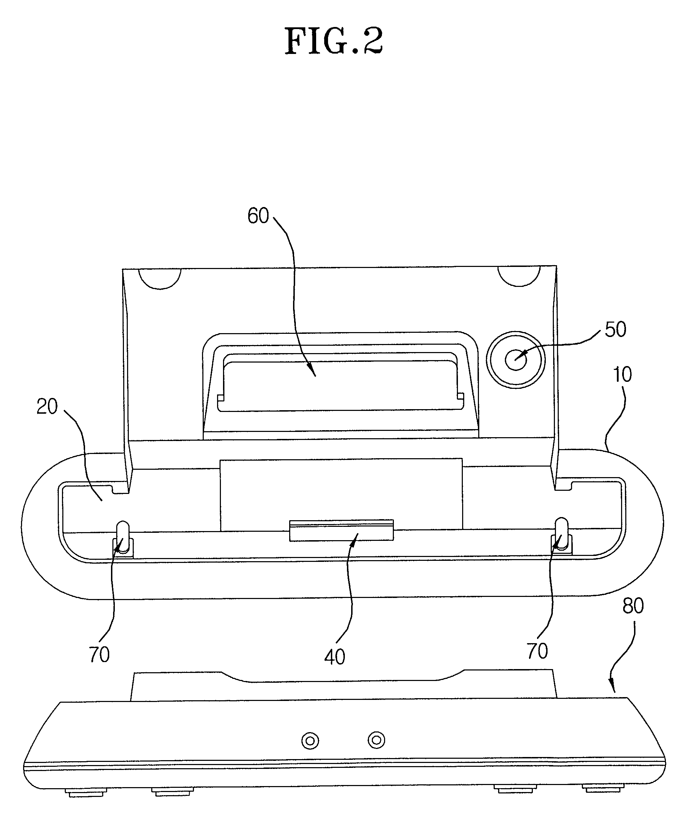

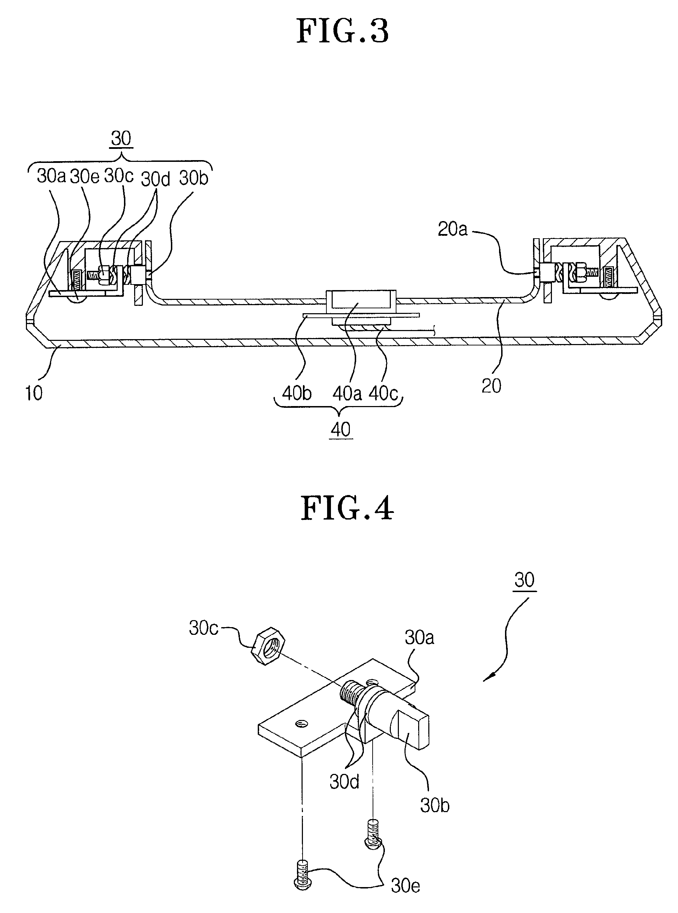

Referring to Figures 2 to 4, a cradle comprises a cradle body 10, a holder 20 and a settlement unit 30. The cradle body 10 has a charging unit 60 to charge the battery of a portable terminal 80, and a pen hole 50 to receive a stylus for use with a touch screen of the portable terminal 80.

The holder 20 has a power supply unit 40 for supplying power to the portable terminal 80 and guides 70 to settle and provide ground contacts to the portable terminal 80. The power supply unit 40 includes a power supply terminal 40a to supply electrical power to the portable terminal 80, a PCB (printed circuit board) connection member 40b connected with a PCB of the cradle body 10, and a cable 40c connected with the PCB connection member 40b. The holder 20 has a channel in which the bottom of the portable terminal 80 is received.

The settling unit 30 comprises a bracket 30a and a threaded lug 30b. The threaded portion of the threaded lug 30b projects rotatably through an eye on the bracket 30a. A nut 30c is tightened on the threaded portion of the lug 30b to hold it to the bracket 30a.

The bracket 30a is mounted in the cradle body 10 to one side by a pair of bolts 30e. A similar bracket 30a is mounted in the cradle 10 to the other side by another pair of bolts 30e.

The holder 20 is engaged at each end by respective lugs 30b which are received in holes 20a in the end walls of the holder 20. Consequently, the holder 20 can be pivoted about an axis running axially through the lugs 30b. However, friction members 30d are disposed between the brackets 30a and the lugs 30b so that the holder 20 stay in position when it has been pivoted by a user to orientate the portable terminal 80.

In this embodiment of the present invention, the brackets 30a and the lugs 30b of the settling units 30 hold the holder 20 at a desired angular position by friction. In an alternative, a plurality of locking members can be provided to set stop positions at different angles.

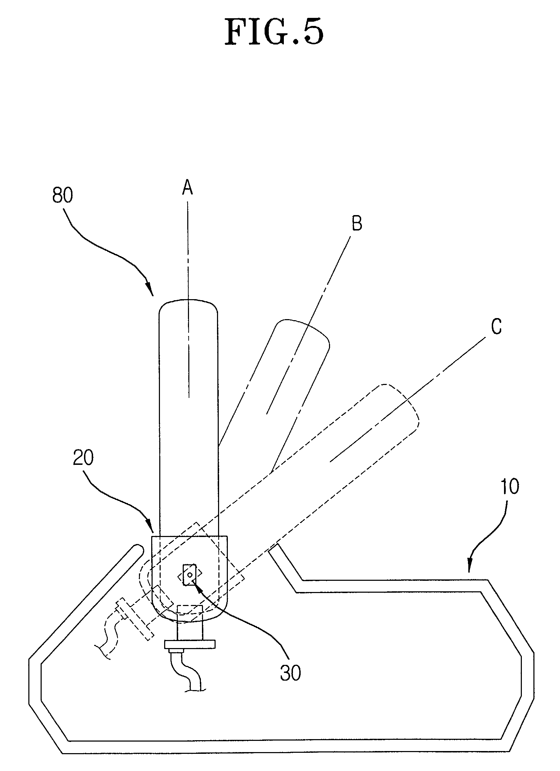

The angle of the holder 20 embracing the portable terminal 80 can adjusted by the user. Referring to Figure 5, the range of angular adjustment of the portable terminal 80 is set by the range of the angular adjustment of the holder 20. In other words, the user can adjust the angle of the portable terminal 80 from line 'A' to line 'C'.

The holder 20 can be rotated with respect to the cradle body 10 and is then held by friction in the settlement units 30. Thus the angle of the holder 20 can be adjusted. Therefore, the angle of the portable terminal 80 settled on the holder 20 also can be adjusted.

According to the present invention, when the portable terminal 80 is used while resting in the cradle, the angle of the screen of the portable terminal 80 can be freely adjusted with respect to the present working conditions, such as the light, and the position of the user.

## Claims

1. A cradle for a portable electronic apparatus (80), the cradle comprising coupling means (20) for engaging a lower portion of a portable electronic apparatus (80) to support the portable electronic apparatus (80), **characterised in that** the coupling means (20) is pivotable for supporting the portable electronic apparatus (80) at different orientations.

2. A cradle according to claim 1, including a body (10), wherein the coupling means (20) is pivotably mounted within the body (10).

3. A cradle according to claim 1 or 2, wherein the coupling means (20) is held in position by friction, the friction being insufficient to prevent manual pivoting of the coupling means (20) for reorienting a portable electronic apparatus (80) held thereby.

4. A cradle according to claim 1, 2 or 3, including an electrical connector (40) mounted to the coupling means (20) for connection with a complementary connector of a portable electronic apparatus (80) when the portable electronic apparatus (80) is supported by the coupling means (20).

5. A cradle according to any preceding claim, wherein the coupling means (20) comprises a trough for receiving a lower portion of a portable electronic apparatus (80).

6. A cradle according to claim 5, wherein the trough (20) is coupled to pivots (30) at either end.

7. A kit comprising a cradle according to any preceding claim and a portable electronic apparatus (80), the coupling means (20) of the cradle being configured for engaging a lower portion of said portable electronic apparatus (80).

8. A cradle device of a portable terminal, comprising:
a cradle body on which the portable terminal is settled; and
a holder to embrace the portable terminal settled on the cradle body, the holder being rotatable with respect to the cradle body within a predetermined angular range.

9. The cradle device according to claim 8, further comprising a settling unit to settle the holder to the cradle body so that a rotation of the holder with respect to the cradle body is prevented if no external force is applied to the holder.

10. The cradle device according to claim 9, wherein the settling unit comprises:
a first settling member settled at the cradle body;
a second settling member settled at the holder and connected with a bracket hinge to provide a relative rotation thereto; and
a friction member disposed between the first settling member and the second settling member, the friction member being in contact with the first settling member and the second settling member to provide a friction force so as to maintain a position of the holder after rotation by a user.

11. The cradle device according to claim 8, wherein the holder has a power supply terminal to supply an external electrical power to the portable terminal embraced by the holder.

12. A cradle device to support a portable terminal, comprising:
a cradle body having a movable holder to support the portable terminal; and
a settling unit to hold and enable frictional rotation of said movable holder with respect to said cradle body to rotate the portable terminal within a predetermined angular range.

13. The device according to claim 12, wherein said settling unit comprises:
a pair of bracket hinges, each bracket hinge connected to opposite sides of said cradle body and having a respective bracket shaft threaded therein at one end and connected with said movable holder at another end to frictionally rotate said movable holder with respect to said respective bracket hinge to maintain a position of the movable holder after rotation thereof by a user.

14. The device according to claim 13, wherein said bracket shafts are secured to the respective sides of said movable holder by fitting therein without any additional connection elements.

15. A cradle device to support a portable terminal, comprising:
a cradle body having a movable holder to support the portable terminal; and
a settling unit to hold said movable holder with respect to said cradle body to rotate the portable terminal within a predetermined angular range, said settling unit having a frictional force of a predetermined degree with respect to said movable holder to maintain said movable holder in position after rotation by a user.
